# FASCICULE DE BREVET EUROPEEN

(11) **EP 0 341 142 B1**
(45) Date de publication et mention de la délivrance du brevet: **07.07.1993**
(21) Numéro de dépôt: 89401210.3
(22) Date de dépôt: 27.04.1989
(51) Int. Cl.: G01S 3/78, B64G 1/36

(54) **Procédé d'observation par balayage d'un corps céleste et de mesure d'une vitesse angulaire d'un véhicule spatial, système d'observation pour sa mise en oeuvre, et véhicule spatial le comportant**
Beobachtungsvorrichtung durch Abtastung eines Raumkörpers und Messung der Winkelgeschwindigkeit eines Raumfahrzeuges, Beobachtungssystem für seine Anwendung und Raumfahrzeug mit diesem System
Observation method including the scanning of a celestial body and the measurement of the angular velocity of a space vehicle, observation system for its application and space vehicle provided with this system

(30) Priorité: 28.04.1988 FR 8805708
(43) Date de publication de la demande: 08.11.1989
(73) Titulaire: AEROSPATIALE Société Nationale Industrielle, 75781 Paris Cédex 16 (FR)
(72) Inventeur: Sainct, Hervé, F-06110 Le Cannet (FR); Maute, Patrick, F-06560 Valbonne (FR); Plantier, Jean-François, F-6100 Nice (FR)
(74) Mandataire: Rinuy, Santarelli

(56) Documents cités:
- FR-A- 2 246 843
- FR-A- 2 551 201
- US-A- 3 535 521
- US-A- 3 576 999
- US-A- 4 328 421

## Description

L'invention concerne la mesure précise de la vitesse angulaire instantanée autour d'un axe donné (par exemple la dérive de tangage) d'un satellite ou autre véhicule spatial pourvu d'une charge utile d'imagerie de la Terre ou d'une autre planète en regard de laquelle est placé ce satellite en vue de son observation.

La mesure de cette vitesse angulaire instantanée peut notamment être utilisée pour le contrôle en attitude de ce véhicule spatial.

Il existe au moins trois moyens d'obtenir des informations sur l'attitude d'un satellite : par mise en oeuvre de senseurs spécifiques d'observation du Soleil, d'étoiles, ou de la Terre, ou de référence inertielle de type gyrométrique. Des exemples en sont donnés dans les documents BE-854.714, FR-2.319.150, US-3.535.521, US-3.641.347, US-3.992.106, US-4.628.206 ou WO 87/00653.

Dans le cas d'une détection terrestre, il existe déjà un grand nombre de senseurs spécifiques simples, mais leur précision augmente avec leur taille, leur encombrement et leur poids. Actuellement, un détecteur doté d'une précision suffisante pour pointer efficacement l'instrument optique d'une charge d'imagerie comporte lui-même un dispositif optique de taille comparable à cet instrument.

L'invention vise à supprimer la redondance de ces optiques et à échapper à la nécessité de prévoir un senseur spécifique, rien que pour mesurer précisément l'une des composantes de variation de l'attitude d'un satellite.

A cet effet, un seul instrument est utilisé pour deux fonctions : l'instrument servant à obtenir l'image de la Terre (ou autre planète ou objet céleste) par balayage, est modifié et complété de façon à mesurer également la vitesse angulaire du satellite autour d'un axe parallèle à l'axe de balayage de ligne avec une précision égale, voire meilleure, que l'angle sous lequel on voit du satellite l'épaisseur (ou le pas) de la ligne balayée au sol.

Dans une version de l'invention la modification consiste en l'adjonction, aux détecteurs normalement prévus dans le plan focal de l'instrument optique de balayage, de deux détecteurs :
- l'un sur l'axe optique,
- l'autre écarté de cet axe perpendiculairement aux lignes de balayage dans les limites permises par l'ouverture du système optique, d'une valeur **d**, dans un sens opposé au sens dans lequel on passe successivement d'une ligne à la suivante.

Le premier détecteur supplémentaire peut être supprimé si sa fonction peut être remplie par l'un des détecteurs normaux du plan focal.

La valeur **d** est choisie de façon que, à chaque instant, le point visé au sol par le second détecteur soit écarté de celui visé au sol par le premier de la distance exacte **e** qu'il y a au sol entre deux lignes, dans la direction perpendiculaire à celle du balayage.

En pratique, les dispositifs connus d'observation par balayage font intervenir des balayages Nord-Sud par des lignes orientées Est-Ouest. L'invention permet dans ce cas de surveiller la dérive en tangage d'un tel satellite d'observation.

De cette façon, le signal fourni par le deuxième détecteur au cours du balayage d'une ligne est identique au signal fourni par le premier détecteur au cours du balayage de la ligne suivante, à condition que les détecteurs soient correctement calibrés et que, l'objet visé n'évolue pas, ou très peu, entre une ligne et la suivante. Ainsi, la rotondité de la Terre et l'état ou l'épaisseur de l'atmosphère n'ont pas d'influence sur la répétition de ce signal.

Si l'on mesure l'instant de passage du signal des détecteurs par un seuil fixe correspondant par exemple à la transition entre l'espace et la Terre (en passant par l'atmosphère), ou plus généralement entre deux zones de luminosité très différentes dans l'image, on obtient au cours de chaque ligne, pour le deuxième détecteur, un signal qui se répète à l'identique sur le premier détecteur lors de la ligne suivante. Cette répétition permet de suivre constamment la dérive de l'attitude autour de l'axe de balayage, ce qui permet de remettre à jour, par exemple, un gyromètre dans le satellite.

L'invention s'applique dans le cas où le balayage d'une ligne est instantané ou suffisamment rapide pour que l'évolution de l'atmosphère (élément mouvant dans l'objet visé) soit négligeable pendant ce temps de balayage.

Des combinaisons de deux ensembles de détecteurs, à la place des deux détecteurs, dont on fait la moyenne des signaux en sortie, ou dans un but de redondance, sont utilisables pour diminuer les erreurs de calibration et/ou obtenir une information de dérive angulaire (d'attitude) plus précise.

De même, le fait que le premier détecteur ou senseur soit aligné sur l'axe optique n'est nullement nécessaire, la contrainte étant que l'écart entre les deux senseurs reste égal à la distance "d" précédemment définie (ou à un multiple entier de celle-ci). Dans une version perfectionnée de l'invention, les senseurs sont dédoublés en deux ensembles, chaque ensemble étant globalement décalé par rapport à l'axe optigue de façon à éliminer le problème se posant pour détecter l'horizon aux pôles (manque de contraste).

De manière très générale, l'invention propose un procédé d'observation par balayage d'un corps céleste à partir d'un véhicule spatial comportant un système d'observation à balayage par référence à un axe de balayage, ce système d'observation comportant un dispositif optique, caractérisé en ce que l'on forme simultanément, lors de chaque balayage, deux signaux correspondant au balayage de deux bandes de sol parallèles et vues par le dispositif optique sous un angle (α) égal à un multiple entier, au moins égal à un, de l'angle (β) sous lequel ce dispositif optique voit la distance entre deux lignes de balayage contiguës interceptant le corps céleste, de telle sorte que la même bande de sol soit enregistrée lors de deux balayages différents, on détecte, en tenant compte du sens de balayage, dans chacun des signaux correspondant au balayage d'une même bande de sol, une transition caractéristique de cette bande au sol, on relève la position relative de ces transitions dans ces signaux, et on détermine à partir d'un éventuel écart entre ces positions relatives une éventuelle vitesse angulaire du véhicule spatial, compte tenu de l'écart de temps séparant les instants où chacune de ces transitions est apparue dans lesdits signaux.

De la sorte ce procédé permet avec le même système d'observation, d'observer par balayage un corps céleste tel que la Terre à partir d'un véhicule spatial et de mesurer la vitesse angulaire de ce véhicule autour de l'axe de balayage par rapport à ce corps céleste. Il en résulte un gain appréciable en fiabilité, en simplicité, en encombrement, en poids et donc en masse disponible.

L'invention propose également un système d'observation de corps célestes dans l'espace, adapté à la mise en oeuvre de ce procédé, du genre comportant un dispositif optique à balayage adapté, par référence à un axe de balayage à scruter ligne par ligne le corps céleste, un ensemble de prise d'images du corps céleste dans le plan focal de ce dispositif optique et selon l'axe optique de celui-ci, et un système de formation et de traitement d'images connecté à cet ensemble de détection, caractérisé en ce qu'il comporte un premier et un second éléments de détection à caractéristiques spectrales identiques disposés dans le plan focal et décalés parallèlement à l'axe de balayage d'une distance vue par le dispositif optique sous un angle égal à un multiple entier, au moins égal à un, de l'angle sous lequel ce dispositif optique voit la distance entre deux lignes de balayage successives ou adjacentes interceptant le corps céleste, ainsi qu'un dispositif de traitement et de mesure de vitesse angulaire connecté à chacun de ces éléments de détection et comportant :
- un circuit pour relever successivement, par l'un puis l'autre de ces éléments de détection des signaux représentatifs d'une même bande au sol balayée sur le corps céleste, ces signaux étant ramenés à un même sens de défilement le long de cette bande au sol ;
- un circuit pour détecter dans chacun de ces signaux une transition caractéristique représentative d'un même point caractéristique de la bande au sol ;
- un circuit pour relever la position relative de chaque transition par rapport au signal qui l'inclut ; et
- un circuit de calcul adapté à déterminer, à partir d'un éventuel écart entre ces positions relatives, une éventuelle vitesse angulaire du véhicule spatial autour d'un axe parallèle à l'axe de balayage, compte tenu de l'intervalle de temps séparant les instants auxquels ont été relevés lesdites transitions caractéristiques.

Enfin, l'invention propose un véhicule spatial comportant ce système d'observation, et des détecteurs de vitesse angulaire pour seulement la dérive angulaire du véhicule spatial autour d'axes perpendiculaires à l'axe de balayage du système d'observation.

On appréciera qu'il est déjà connu d'associer des mesures d'attitude et des opérations de prises d'images, par exemple d'après les documents US-4.682.300, US-4.688.091, US-4.688.092 et FR-2.556.159, mais cette association vise à compenser les perturbations affectant les images du fait d'une éventuelle dérive d'attitude.

Par ailleurs, il est déjà connu de par le document FR-2.551.201 de surveiller une éventuelle dérive d'attidude grâce à un système d'observation, mais il s'agit d'une toute autre solution faisant intervenir un processus de formation d'images tout à fait différent, sans balayage au sens de l'invention, avec mise en oeuvre de lignes parallèles de détecteurs à transfert de charge (type CCD).

Des objets, caractéristiques et avantages de l'invention ressortent de la description qui suit, donnée à titre d'exemple non limitatif, en regard des dessins annexés sur lesquels:
- la figure 1 est un schéma de principe d'un dispositif conforme à l'invention et de sa mise en oeuvre ;
- la figure 2 est un schéma de principe de la détection des bords de la Terre ;
- la figure 3 est un schéma illustrant la mise en oeuvre de deux paires de détecteurs ;
- la figure 4 est un graphique montrant les signaux correspondants obtenus par un détecteur infra-rouge et une détection de lumière visible ;
- la figure 5 est un diagramme illustrant des signaux observés par les éléments de détection pour une même bande au sol.

L'exemple décrit ci-dessous concerne en particulier les satellites d'observation météorologique.

Un tel satellite schématisé en S contient un système d'observation 10 ou imageur qui balaye l'image I de la Terre T et une partie de l'espace environnant.

Les lignes de balayage Lₙ sont orientées Est-Ouest, les sauts de lignes (Lₙ à Lₙ₊₁) s'effectuant dans la direction Nord-Sud. L'axe de balayage X-X est donc orienté Nord-Sud. L'évolution d'attitude au cours d'une prise d'image doit être mesurée très précisément.

Les composantes perpendiculaires à l'axe de balayage sont mesurées de façon conventionnelle par un senseur optique classique (solaire ou stellaire) schématisé en 11.

Le système d'observation ou imageur 10 comporte un dispositif optique à balayage 12 connu en soi, adapté. par référence à l'axe de balayage X-X, à scruter ligne par ligne la Terre T. Dans le plan focal P de ce dispositif optique 12 et selon l'axe optique Z-Z de celui-ci est disposé un ensemble de détection 13 de tout type connu approprié, auquel est associé un système 14 de formation et de traitement d'images connu en soi, adaptés à relever pour chaque point au sol la valeur de signal et sa date.

Dans ce plan focal P sont également disposés un premier et un second éléments de détection électromagnétique 1 et 2 identiques entre eux de tout type approprié connu (adaptés à réagir à des rayonnements incidents de mêmes caractéristiques spectrales, notamment lumière visible et/ou infra-rouge).

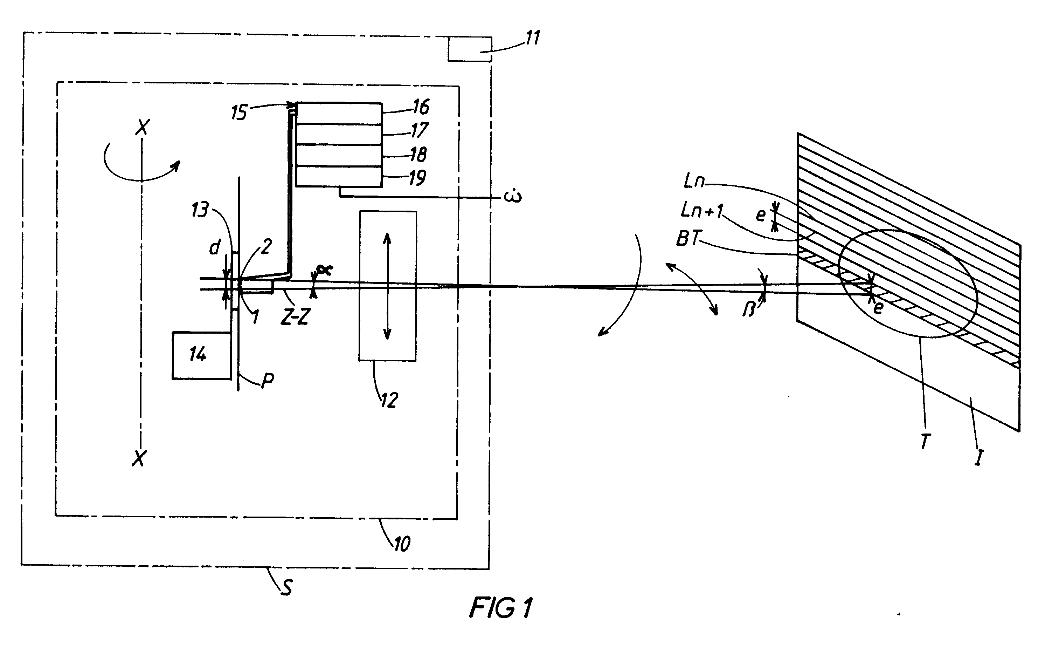

Dans l'exemple de la figure 1, ces éléments de détection 1 et 2 sont distincts de l'ensemble de détection 13, l'un de ces éléments (1) étant situé sur l'axe optique Z-Z. Ces éléments sont par exemple constitués chacun d'un détecteur.

Les éléments de détection sont décalés, parallèlement à l'axe de balayage Z-Z d'une distance d qui est vue par le dispositif optique 12 sous un angle α égal à un multiple entier, au moins égal à un, de l'angle β sous lequel ce dispositif optique voit la distance e entre deux lignes contiguës Lₙ et Lₙ₊₁ interceptant le corps céleste T.

Les angles α et β sont par exemple égaux (dans la figure 1 l'angle β a été artificiellement augmenté pour des raisons de lisibilité du dessin).

Aux éléments de détection 1 et 2 est connecté un dispositif de traitement et de mesure de vitesse angulaire 15 comportant :
- un circuit 16 adapté à former et sélectionner des signaux A et B (voir figure 5) relevés successivement (ainsi que les dates des points qui les constituent), par ces éléments de détection, pour une même bande au sol BT balayée sur la Terre T, ces signaux étant ramenés au même sens de défilement le long de cette bande (Est-Ouest, ou Ouest-Est) ;
- un circuit 17 adapté à détecter dans chacun de ces signaux A et B une transition caractéristique A1 et B1 représentative d'un même point caractéristique de la bande au sol considérée (il s'agit par exemple de l'interface espace/atmosphère et/ou Terre, ou de tout autre détail géographique impliquant un contraste marqué tel que transition entre étendue d'eau et terre ferme, ou rivière, ou gorge...) ;
- un circuit 18 adapté à relever la position relative de chaque transition A1 ou B1 par rapport au signal A ou B (par référence par exemple à l'extrémité gauche de chaque signal) ; et
- un circuit de calcul 19 adapté à déterminer à partir d'un éventuel écart Δ1 entre ces positions relatives, une éventuelle vitesse angulaire ω̇ du satellite, compte tenu de l'écart de temps existant entre les instants où chacune des discontinuités A1 et B1 a été relevée.

La constitution de ces circuits ne pose pas de difficultés pour l'homme de métier compte tenu des indications qui précèdent et ne sera pas détaillée plus avant.

En effet, dans le cas considéré où α et β sont égaux et où une même bande au sol est observée par les éléments de détection 1 et 2 au cours du balayage successif de deux lignes contiguës, si l'on mesure l'instant de passage du signal des détecteurs 1 et 2 par un seuil fixe V correspondant par exemple à la transition entre l'espace et la Terre (en passant par l'atmosphère), ou plus généralement entre deux zones de luminosité très différentes dans l'image, on obtient au cours de chaque ligne, pour le deuxième détecteur 2, un signal (A) qui se répète a priori à l'identique (B) sur le premier détecteur lors de la ligne suivante Lₙ₊₁. Cette répétition permet de suivre constamment la dérive de l'attitude autour de l'axe de balayage, ce qui permet de recaler le gyromètre, c'est-à-dire d'annuler la dérive constatée, par exemple dans le cas d'un gyromètre dans le satellite.

L'invention s'applique dans le cas où le balayage d'une ligne est instantané ou suffisamment rapide pour que l'évolution de l'atmosphère (élément mouvant dans l'objet visé) soit négligeable pendant ce temps de balayage.

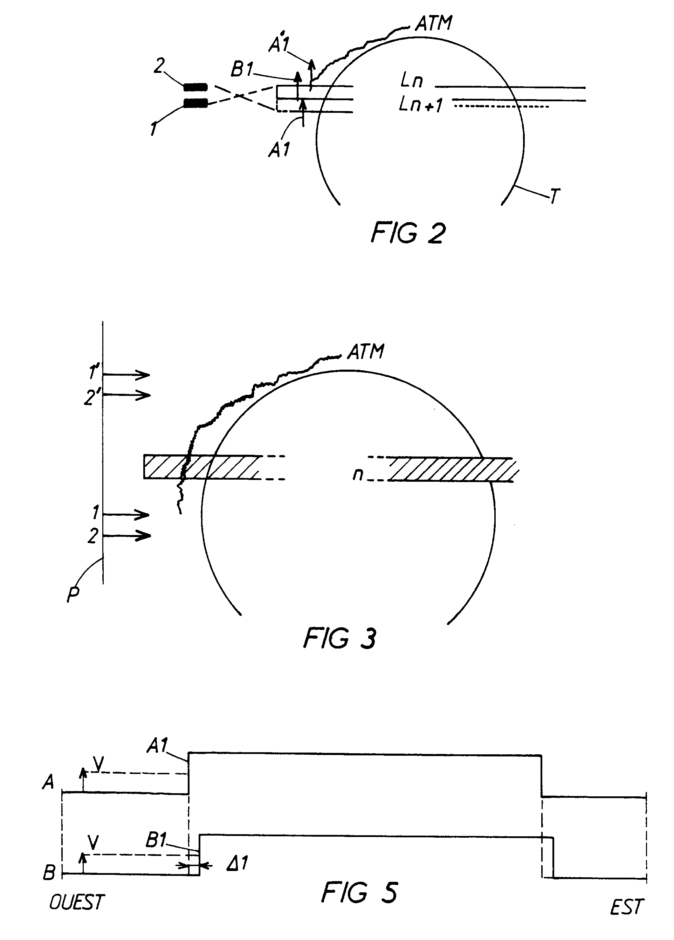

Dans la figure 2 où l'atmosphère est figurée partiellement par une ligne irrégulière ATM, les flèches verticales symbolisent la détection du bord de terre A1 ou B1 ainsi que A′1 relevé par le détecteur 2 tandis que le détecteur 1 scrute une ligne contiguë.

Pour éviter la disparition des seuils francs, c'est-à-dire à forte pente au voisinage des pôles, les détecteurs 1 et 2 sont dédoublés en deux paires (1, 2 et 1′, 2′ sur la figure 3), chaque paire étant globalement décalée dans le plan focal par rapport à l'axe optique vers le Nord ou vers le Sud ce qui a pour effet de décaler également leur ligne de visée. De cette façon, lorsque le Nord de l'image commence à être balayé, la paire dont les lignes de visée sont décalées vers le Sud va détecter des intersections espace/terre suffisamment au Sud du pôle Nord pour que les transitions soient franches.

De même, lorsque le Sud de l'image est balayé on utilise la paire dont les lignes de visée sont décalées vers le Nord.

Aux alentours du milieu de l'image, on bascule d'une paire sur l'autre en utilisant successivement les couples de détecteurs suivants :
- 1 et 2 (configuration nominale)
- puis 1 et 2′ (étage de transition : on compare le seuil du détecteur 1 et celui du détecteur 2 de la ligne précédente)
- puis 1′ et 2′ (autre configuration nominale, on compare le seuil du détecteur 1′ avec celui du détecteur 2′ à la ligne précédente)

La longueur d'onde utilisée pour les détecteurs 1, 2, 1′, 2′ est de préférence voisine de l'infra-rouge de façon à obtenir un fort contraste terre/espace même lorsque la Terre n'est pas éclairée par le Soleil. En fait, la longueur d'onde utilisée peut, très généralement, être choisie dans une grande bande spectrale)
Enfin, chaque paire de détecteurs est en fait constituée de deux ensembles de détecteurs pour assurer la redondance de leur fonction.

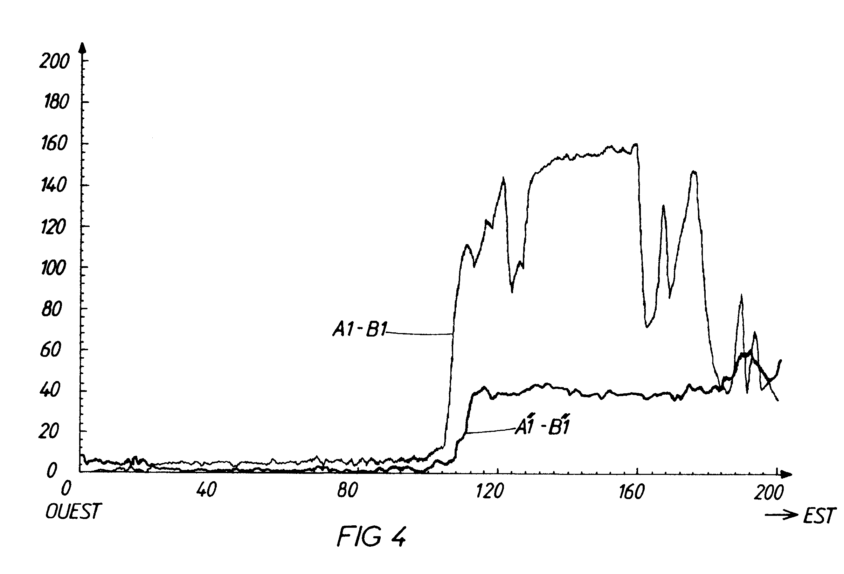

La courbe intensité-distance de la figure 4 donne le résultat d'une simulation utilisant des données image METEOSTAT.

On y distingue clairement la transition Terre/espace A1 ou B1 pour des détecteurs infra-rouges, et A˝1 ou B˝1 pour des détecteurs d'ondes visibles, moins efficaces la nuit.

On notera que l'utilisation de l'instrument optique 10 lui-même permet de se passer d'une deuxième optique comme dans les solutions connues, et de tout autre senseur (Soleil, étoiles) remplissant la même fonction de mesure de vitesse angulaire autour de l'axe X-X. La combinaison de deux détecteurs permet de s'affranchir de la rotondité de la terre et des fluctuations de l'atmosphère.

Il va de soi que la description qui précède n'a été proposée qu'à titre d'exemple non limitatif et que de nombreuses variantes peuvent être proposées par l'homme de l'art sans sortir du cadre de l'invention.

Ainsi par exemple, on appréciera que le raisonnement exposé à propos de la figure 5 est indépendant du sens dans lequel est balayée la bande au sol considérée pour la constitution du signal A puis du signal B, ce qui est compatible avec des sens alternés de balayage.

En variante, l'angle α est un multiple pair de β, par exemple égal à 2 auquel cas, quel que soit le sens de balayage de lignes successives, on peut prévoir que le temps séparant les transitions A1 et B1 doit être en théorie, en l'absence de vitesse angulaire, un multiple de la durée de balayage de chaque ligne.

Par ailleurs, les positions des éléments de détection 1 et 2 peuvent être intervertis auquel cas l'ordre chronologique de constitution des signaux A et B est interverti, ce qui ne change pas en substance le principe de l'invention.

Le signal de vitesse fourni par le dispositif de traitement 15 peut être utilisé à des fins très diverses, notamment pour le contrôle d'attitude du satellite à l'aide des organes connus classiquement utilisés à cet effet (tuyères...).

## Revendications

1. Procédé d'observation par balayage d'un corps céleste (T) à partir d'un véhicule spatial (S) comportant un système d'observation à balayage par référence à un axe de balayage (X-X), ce système d'observation comportant un dispositif optique (12),
caractérisé en ce que
l'on forme simultanément, lors de chaque balayage, deux signaux correspondant au balayage de deux bandes de sol parallèles et vues par le dispositif optique sous un angle (α) égal à un multiple entier, au moins égal à un, de l'angle (β) sous lequel ce dispositif optique voit la distance (e) entre deux lignes de balayage contiguës (Lₙ, Lₙ₊₁) interceptant le corps céleste (T), de telle sorte que la même bande de sol (BT) soit enregistrée lors de deux balayages différents,
on détecte (17), en tenant compte du sens de balayage, dans chacun des signaux correspondant au balayage d'une même bande de sol (BT), une transition caractéristique (A1, B1) représentative d'un même point caractéristique de cette bande au sol, on relève (18) la position relative de ces transitions dans ces signaux, et on détermine (19) à partir d'un éventuel écart entre ces positions relatives une éventuelle vitesse angulaire (ω̇) du véhicule spatial, compte tenu de l'écart de temps séparant les instants où chacune de ces transitions est apparue dans lesdits signaux.

2. Procédé d'observation selon la revendication 1, caractérisé en ce que on utilise cet écart angulaire ou cette vitesse angulaire pour contrôler l'attitude du véhicule spatial autour de l'axe de balayage, en annulant la dérive constatée.

3. Système d'observation (10) pour véhicule spatial (S) en regard d'un corps céleste (T), du genre comportant un dispositif optique à balayage (12) adapté, par référence à un axe de balayage (X-X) à scruter ligne par ligne le corps céleste, un ensemble (13) de prises d'images du corps céleste (T) dans le plan focal (P) de ce dispositif optique et selon l'axe optique de celui-ci, et un système de formation et de traitement d'images (14) connecté à cet ensemble de détection, caractérisé en ce qu'il comporte un premier (1 ; 1, 1′) et un second (2 ; 2, 2′) éléments de détection à caractéristiques spectrales identiques disposés dans le plan focal et décalés parallèlement à l'axe de balayage (X-X) d'une distance (d) vue par le dispositif optique (12) sous un angle (α) égal à un multiple entier, au moins égal à un, de l'angle (β) sous lequel ce dispositif optique voit la distance (e) entre deux lignes de balayage contiguës (Lₙ, Lₙ₊₁) interceptant le corps céleste (T), ainsi qu'un dispositif (15) de traitement et de mesure de vitesse angulaire connecté à chacun de ces éléments de détection et comportant :
- un circuit (16) pour relever successivement, par l'un puis l'autre de ces éléments de détection des signaux (A, B) représentatifs d'une même bande au sol balayée sur le corps céleste, ces signaux étant ramenés à un même sens de défilement le long de cette bande au sol ;
- un circuit (17) pour détecter dans chacun de ces signaux (A, B) une transition caractéristique (A1, B1) représentative d'un même point caractéristique de la bande au sol ;
- un circuit (18) pour relever la position relative de chaque transition par rapport au signal qui l'inclut ; et
- un circuit de calcul (19) adapté à déterminer, à partir d'un éventuel écart entre ces positions relatives, une éventuelle vitesse angulaire du véhicule spatial autour d'un axe parallèle à l'axe de balayage, compte tenu de l'intervalle de temps séparant les instants auxquels ont été relevés lesdites transitions caractéristiques.

4. Système selon la revendication 3, caractérisé en ce que le premier élément de détection (1) est disposé sur l'axe optique (Z-Z) du système optique à balayage.

5. Système selon la revendication 3 ou la revendication 4, caractérisé en ce que le premier élément de détection fait partie de l'ensemble (13) de prises d'images du corps céleste (T).

6. Système selon l'une quelconque des revendications 3 à 5, caractérisé en ce que chacun des éléments de détection est dédoublé en deux sous-éléments (1, 2 ; 1′, 2′) décalés parallèlement à l'axe de balayage, chaque sous-élément étant globalement décalé dans le plan focal par rapport à l'axe optique parallèlement à l'axe de balayage.

7. Système selon l'une quelconque des revendications 3 à 6, caractérisé en ce que les angles (α, β) sous lesquels le système optique voit, d'une part la distance entre les éléments de détection (1, 2) et, d'autre part la distance entre deux lignes de balayage contigües sont égaux.

8. Système selon l'une quelconque des revendications 3 à 6, caractérisé en ce que l'angle (α) sous lequel le système optique voit la distance entre les éléments de détection est un multiple pair de l'angle (β) sous lequel ce dispositif voit la distance entre deux lignes de balayage contigües, l'écart entre les transitions caractéristiques étant défini par l'écart entre l'intervalle de temps séparant les transitions caractéristiques et le même multiple pair de la durée de balayage de chaque ligne.

9. Système selon l'une quelconque des revendications 3 à 8, caractérisé en ce que les éléments de détection (1,2) sont sensibles aux rayonnements infra-rouge.

10. Véhicule spatial comportant un système d'observation selon l'une quelconque des revendications 3 à 9, ainsi que des détecteurs de vitesse angulaire (11) associés à des axes de rotation perpendiculaires à l'axe de balayage.

## Claims

1. A method of observation of a celestial body (T), by scanning from a space vehicle (S) which has observation apparatus for scanning by reference to a scanning axis (X-X), the said observation apparatus comprising an optical device (12), characterised in that on each scan, two signals are formed simultaneously, corresponding to the scanning of two parallel bands on the ground viewed by the optical device over an angle (α) equal to a whole number multiple, equal to at least 1, of the angle (β) over which the optical device views the distance (e) between two contiguous scanning lines (Lₙ, Lₙ₊₁) intercepting the celestial body (T), in such a way that the same band on the ground (BT) is observed during two separate scans, a characteristic transition (A1, B1), which represents the same characteristic point on the said band on the ground, is detected (17) having regard to the scanning direction, in each of the signals corresponding to the scan of the same band on the ground (BT), the relative position of the said transitions in the said signals is read (18), and any angular velocity (ω̇) of the space vehicle is determined (19) from any difference existing between the said positions, having regard to the time difference separating the instants at which each of the said transitions has appeared in the said signals.

2. A method of observation according to Claim 1, characterised in that the said angular velocity is used to control the attitude of the space vehicle about the scanning axis, by annulment of the detected drift.

3. Observation apparatus (10) for a space vehicle (S) facing towards a celestial body (T), of the kind including an optical scanning device (12) which is adapted to scrutinise the celestial body line by line by reference to a scanning axis (X-X), an assembly (13) for taking images of the celestial body (T) in the focal plane (P) of the said optical device and along the optical axis of the latter, and an image forming and processing system (14) connected to the said detection assembly, characterised in that it comprises a first detecting element (1; 1, 1') and a second detecting element (2; 2, 2') having identical spectral characteristics, disposed in the focal plane and offset parallel to the scanning axis (X-X) by a distance (d) which is viewed by the optical apparatus (12) over an angle (∝) equal to a whole number multiple, equal to at least 1, of the angle (β) over which the optical device views the distance (e) between two contiguous scanning lines (Lₙ, Lₙ₊₁) intercepting the celestial body (T), together with a device (15) for processing and measuring angular velocity, which is connected to each of the said detection elements and which includes:
- a circuit (16) for reading in succession, by means of first one and then the other of the said detecting elements, signals (A, B) representing the same band on the ground scanned on the celestial body, the said signals being arranged into a series in a common direction along the said band on the ground;
- a circuit (17) for detecting, in each of the said signals (A, B), a characteristic transition (A1, B1) representing a common characteristic point of the band on the ground;
- a circuit (18) for reading the relative position of each transition with respect to the signal that includes it; and
- a computing circuit (19) adapted to determine, from any difference between the said relative positions, any angular velocity of the space vehicle about an axis parallel to the scanning axis, having regard to the time lapse between the instants at which the said characteristic transitions have been read.

4. Apparatus according to Claim 3, characterised in that the first detection element (1) is disposed on the optical axis (Z-Z) of the optical scanning system.

5. Apparatus according to Claim 3 or Claim 4, characterised in that the first detection element is part of the assembly (13) for taking images of the celestial body (T).

6. Apparatus according to any one of Claims 3 to 5, characterised in that each of the detection elements is divided into two sub-elements (1, 2; 1', 2') which are offset parallel to the scanning axis, each sub-element being generally offset in the focal plane with respect to the optical axis, in a sense parallel to the scanning axis.

7. Apparatus according to any one of Claims 3 to 6, characterised in that the angles (α, β) over which the optical system views, firstly, the distance between the detection elements (1, 2), and secondly the distance between two contiguous scanning lines, are equal.

8. Apparatus according to any one of Claims 3 to 6, characterised in that the angle (α) over which the optical system views the distance between the detecting elements is an even multiple of the angle (β) over which the said device views the distance between two contiguous scanning lines, the difference between the characteristic transitions being defined by the difference between the time lapse separating the characteristic transitions and the same even multiple of the scanning time for each line.

9. Apparatus according to any one of Claims 3 to 8, characterised in that the detection elements (1, 2) are sensitive to infra-red radiation.

10. A space vehicle including observation apparatus according to any one of Claims 3 to 9, together with angular velocity detectors (11) associated with axes of rotation at right angles to the scanning axis.

## Patentansprüche

1. Verfahren zur Beobachtung eines Himmelskörpers (T) durch Abtastung von einem Raumfahrzeug (S) aus, das ein System zur Beobachtung durch Abtastung gemäß einer Abtastachse (X-X) mit einer optischen Vorrichtung (12) umfaßt, dadurch gekennzeichnet, daß gleichzeitig bei jeder Abtastung zwei Signale gebildet werden, die der Abtastung von zwei parallelen Bodenbändern entsprechen, die von der optischen Vorrichtung unter einem Winkel (α) gesehen werden, der gleich einem ganzzahligen Vielfachen und wenigstens gleich dem Einfachen des Winkels (β) ist, unter welchem diese optische Vorrichtung den Abstand (e) zwischen zwei benachbarten, den Himmelskörper (T) schneidenden Abtastlinien (Lₙ, Lₙ₊₁) sieht, so daß ein und dasselbe Bodenband (BT) bei zwei verschiedenen Abtastungen aufgezeichnet wird, daß man unter Berücksichtigung der Abtastrichtung in jedem der der Abtastung ein und desselben Bodenbandes (BT) entsprechenden Signale einen charakteristischen Übergang (A1, B1) erfaßt (17), der ein und denselben charakteristischen Punkt dieses Bodenbandes darstellt, daß man die relative Stellung dieser Übergänge in diesen Signalen ermittelt (18) und aus einem ggf. bestehenden Abstand zwischen diesen relativen Stellungen eine ggf. vorhandene Winkelgeschwindigkeit (ω̇) des Raumfahrzeugs unter Berücksichtigung des zeitlichen Abstands zwischen den Zeitpunkten des Auftretens jedes der Übergänge in den Signalen bestimmt (19).

2. Beobachtungsverfahren nach Anspruch 1, dadurch gekennzeichnet, daß man diesen Winkelabstand oder diese Winkelgeschwindigkeit zur Steuerung der Fluglage des Raumfahrzeugs um die Abtastachse herum durch Aufhebung der festgestellten Abweichung verwendet.

3. System (10) zur Beobachtung eines Himmelskörpers (T) für ein Raumfahrzeug (S) mit einer optischen Abtastvorrichtung (12), die den Himmelkörper gemäß einer Abtastachse (X-X) Zeile für Zeile abtasten kann, einer Einheit (13) zur Aufnahme von Bildern des Himmelskörpers (T) in der Brennebene (P) dieser optischen Vorrichtung und in deren optischen Achse und einem mit dieser Erfassungseinheit verbundenen System (14) zur Herstellung und Verarbeitung von Bildern, gekennzeichnet durch ein erstes (1; 1, 1') und ein zweites (2; 2, 2') Erfassungselement mit gleichen spektralen Charakteristiken, die in der Brennebene angeordnet und parallel zur Abtastachse (X-X) in einem Abstand (d) gegeneinander versetzt sind, der von der optischen Vorrichtung (12) unter einem Winkel (α) gesehen wird, der gleich einem ganzzahligen Vielfachen und wenigstens gleich dem Einfachen des Winkels (β) ist, unter welchem diese optische Vorrichtung den Abstand (e) zwischen zwei benachbarten den Himmelskörper (T) schneidenden Abtastlinien (Lₙ, Lₙ₊₁) sieht, sowie eine mit jeden dieser Erfassungselemente verbundene Vorrichtung (15) zur Winkelgeschwindigkeitsverarbeitung und -messung, die umfaßt:
- eine Schaltung (16), die nacheinander über das eine und dann über das andere Erfassungselement Signale (A, B) aufnimmt, die ein und dasselbe auf dem Himmelskörper abgetastete Bodenband darstellen und in die gleiche Durchlaufrichtung auf diesem Bodenband gebracht werden,
- eine Schaltung (17) zur Erfassung eines charakteristischen Übergangs (A1, B1) in jedem dieser Signale (A, B), der ein und denselben charakteristischen Punkt des Bodenbandes darstellt,
- eine Schaltung (18) zur Ermittlung der relativen Stellung jedes Übergangs bezüglich des ihn enthaltenden Signals, und
- eine Rechenschaltung (19), die aus einem ggf. bestehenden Abstand zwischen diesen relativen Stellungen eine ggf. vorhandene Winkelgeschwindigkeit des Raumfahrzeugs um eine zur Abtastachse parallele Achse unter Berücksichtigung des zeitlichen Abstands zwischen den Zeitpunkten, an denen die charakeristischen Übergänge festgestellt wurden, bestimmen kann.

4. System nach Anspruch 3, dadurch gekennzeichnet, daß das erste Erfassungselement (1) in der optischen Achse (Z-Z) des optischen Abtastsystems angeordnet ist.

5. System nach Anspruch 3 oder 4, dadurch gekennzeichnet, daß das erste Erfassungselement einen Teil der Einheit (13) zur Aufnahme von Bildern des Himmelskörpers (T) bildet.

6. System nach einem der Ansprüche 3 bis 5, dadurch gekennzeichnet, daß jedes der Erfassungselemente in zwei Unterelemente (1, 2; 1', 2') geteilt ist, die parallel zur Abtastachse gegeneinander versetzt sind, wobei jedes Unterelement insgesamt in der Brennebene bezüglich der optischen Achse parallel zur Abtastachse versetzt ist.

7. System nach einem der Ansprüche 3 bis 6, dadurch gekennzeichnet, daß die Winkel (α, β), unter denen das optische System einerseits den Abstand zwischen den Erfassungselementen (1, 2) und andererseits den Abstand zwischen zwei benachbarten Abtastzeilen sieht, gleich sind.

8. System nach einem der Ansprüche 3 bis 6, dadurch gekennzeichnet, daß der Winkel (α), unter dem das optische System den Abstand zwischen den Erfassungselementen sieht, ein geradzahliges Vielfaches des Winkels (β) ist, unter welchem diese Vorrichtung den Abstand zwischen zwei benachbarten Abtastzeilen sieht, wobei der Abstand zwischen den charakteristischen Übergängen definiert ist durch den Abstand zwischen dem die charakteristischen Übergänge trennenden Zeitintervall und demselben geradzahligen Vielfachen der Abtastdauer jeder Zeile.

9. System nach einem der Ansprüche 3 bis 8, dadurch gekennzeichnet, daß die Erfassungselemente (1, 2) für Infrarotstrahlen empfindlich sind.

10. Raumfahrzeug, das ein Beobachtungssystem nach einem der Ansprüche 3 bis 9 sowie Winkelgeschwindigkeitsdetektoren (11) umfaßt, die zur Abtastachse senkrechten Drehachsen zugeordnet sind.
